# EUROPEAN PATENT APPLICATION

(11) **EP 2 680 049 A1**
(43) Date of publication of application: **01.01.2014**
(21) Application number: 13163526.0
(22) Date of filing: 12.04.2013
(51) Int. Cl.: G02B 6/00, F21V 8/00

(54) **Light guide device**

(30) Priority: 26.06.2012 TW 101122721
(71) Applicant: TYC Brother Industrial Co., Ltd., Tainan 702 (TW)
(72) Inventor: Chiu, Yi-Da, Tainan 702 (TW); Wu, Jin-Hua, Tainan 702 (TW); Shih, Ming-Jhih, Tainan 702 (TW)
(74) Representative: 2K Patentanwälte Blasberg Kewitz & Reichel

(57) **Abstract**

The present invention relates to a light guide device including at least one light guide strip. Each light guide strip includes an incident portion and at least two sections including at least one first section and at least one second section. A total length of the first section is L1, a total length of the output portions of the first section is R1, and R1/L1 is a light output ratio P1; a total length of the second section is L2, a total length of the output portions of the second section is R2, and R2/L2 is a light output ratio P2; P2=K×P1/(1-P1). The total length of the output portions of the second section is controlled so that an output light amount of the second section is the same as that of the first section, so as to improve output light amount uniformity of the light guide device.

## Description

### BACKGROUND OF THE INVENTION

### FIELD OF THE INVENTION

The present invention relates to a light guide device, and more particularly to a light guide device for a vehicle lamp.

### DESCRIPTION OF THE RELATED ART

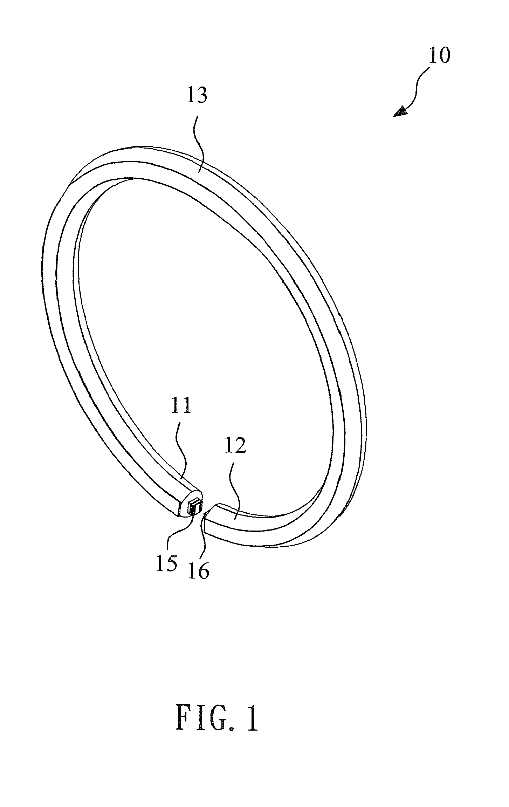

Referring to FIG. 1, it is a schematic view of a conventional light guide device for a vehicle lamp. The conventional light guide device 10 includes a first end 11, a second end 12, and an intermediate portion 13. Two light sources 15 and 16 are disposed at the first end 11 and the second end 12 of the light guide device 10 respectively. The light guide device 10 is in the shape of a ring. Light from the two light sources 15 and 16 enters the light guide device 10 through the first end 11 and the second end 12 of the light guide device 10, and is then reflected and transmitted in the light guide device 10, and the light is output. The intermediate portion 13 of the light guide device 10 receives the transmitted light from the first end 11 and the second end 12 respectively, so that a light mixing phenomenon can be incurred in the intermediate portion 13 of the light guide device 10, which makes output light of the intermediate portion 13 of the light guide device 10 be different from output light of other portions of the light guide device 10.

In addition, the light mixing phenomenon is incurred to the intermediate portion 13 of the light guide device 10, so that the conventional light guide device 10 has to use the two light sources 15 and 16 of a same color, and cannot use light sources of different colors, and therefore the conventional light guide device 10 can only emit light of a single color.

Furthermore, in addition to that the output light of the intermediate portion 13 of the light guide device 10 is different from the output light of other portions of the light guide device 10, between the first end 11 of the light guide device 10 and the intermediate portion 13 and between the second end 12 and the intermediate portion 13, transmission or output of light in the light guide device 10 is not explicitly controlled, so that light guide uniformity of sections of the light guide device 10 is not good.

### SUMMARY OF THE INVENTION

The present invention provides a light guide device including at least one light guide strip. Each light guide strip includes an incident portion and at least two sections. The incident portion is disposed at a first end of the light guide strip, and is used for receiving at least one light source. The at least two sections include at least one first section and at least one second section. The first section and the second section respectively have a plurality of output portions and a plurality of light guide portions. A total length of the first section is L1, a total length of the output portions of the first section is R1, and R1/L1 is a light output ratio P1; a total length of the second section is L2, a total length of the output portions of the second section is R2, and R2/L2 is a light output ratio P2; P2=K×P1/(1-P1), where K is a parameter, and a range of K is 1.3-2.3.

The total length of the output portions of the second section is controlled so that an output light amount of the second section is the same as that of the first section, so as to improve output light amount uniformity of the light guide device of the present invention. Furthermore, the light guide strip of the light guide device of the present invention is provided with a light source at a single end, and the other end is provided with a reflecting surface, so that a light mixing phenomenon does not occur. Furthermore, according to the present invention the plurality of light guide strips of the light guide device can receive light sources of different colors respectively, and the plurality of light guide strips can be connected to form a predetermined shape, so as to provide more shapes and color variation of emitted light.

### BRIEF DESCRIPTION OF THE DRAWINGS

FIG. 1 shows a schematic view of a conventional light guide device for a vehicle lamp;

FIG. 2 shows a schematic perspective view of a light guide device according to a first embodiment of the present invention;

FIG. 3 shows a schematic sectional view of a light guide strip of the light guide device according to the first embodiment of the present invention;

FIG. 4 shows a schematic perspective view of a light guide device according to a second embodiment of the present invention; and

FIG. 5 shows a schematic perspective view of a light guide device according to a third embodiment of the present invention.

### DETAILED DESCRIPTION OF THE INVENTION

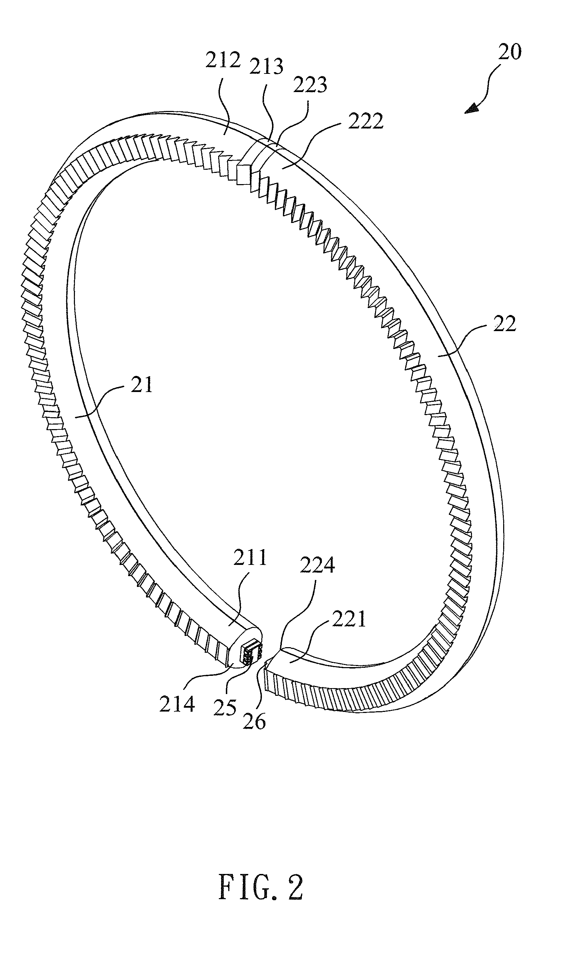

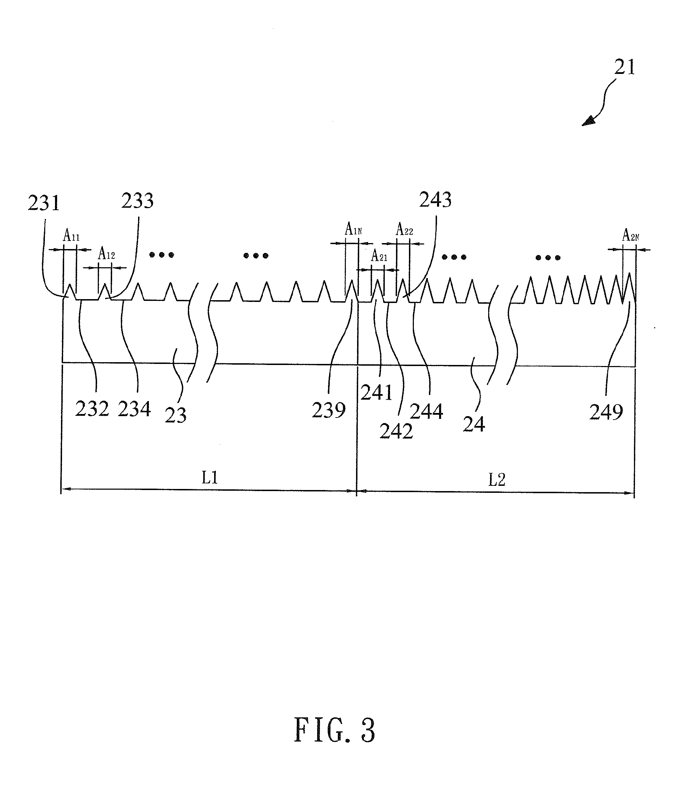

Referring to FIG. 2, it is a schematic perspective view of a light guide device according to a first embodiment of the present invention. Referring to FIG. 3, it is a schematic sectional view of a light guide strip of the light guide device according to the first embodiment of the present invention. The light guide device of the present invention can be used for a vehicle lamp. Referring to FIG. 2 and FIG. 3, according to the first embodiment of the present invention the light guide device 20 includes at least one light guide strip 21 and 22. In the embodiment, the light guide device 20 includes two light guide strips 21 and 22, and each light guide strip is in the shape of a semi-circular arc, so as to form the ring-shaped circular light guide device 20.

Each light guide strip includes an incident portion and at least two sections. The incident portion is disposed at a first end of the light guide strip, and is used for receiving at least one light source. In the embodiment, the incident portion 214 of the light guide strip 21 is disposed at the first end 211, and is used for receiving a light source 25; the incident portion 224 of the light guide strip 22 is disposed at the first end 221, and is used for receiving a light source 26.

The light guide strip 21 is taken as an example to illustrate the structure of the light guide strip. The light guide strip 21 includes a first section 23 and a second section 24. The first section and the second section respectively have a plurality of output portions and a plurality of light guide portions. The first section 23 has a plurality of light guide portions 232 and 234 and a plurality of output portions 231 and 233. The second section 24 has a plurality of light guide portions 242 and 244 and a plurality of output portions 241 and 243. In the embodiment, the output portions and the light guide portions are disposed in an alternate manner, and each light guide portion is flat, so as to reflect and transmit light; each output portion is zigzag, so as to output light.

The first section 23 includes the first end 211. That is, the first section 23 is disposed at the first end 211. The second section 24 connects the first section 23. In the embodiment, a total length of the first section 23 is L1, a total length of the second section 24 is L2, and a total length of the output portions of the first section 23 is R1. For example, a length of an output portion 231 is A11, a length of an output portion 233 is A12, ..., and a length of an output portion 239 is A1N, so that the total length of the output portions of the first section 23 is a sum of A11, A12, ..., and A1N, that is, R1=A11+A12+...A1N. Similarly, a total length of the output portions of the second section 24 is R2. A length of an output portion 241 is A21, a length of an output portion 243 is A22, ..., and a length of an output portion 249 is A2N, so that R2=A21+A22+...A2N.

The output portions are used for outputting light, so that a light output ratio of the first section 23 can be a ratio of the total length R1 of the output portions to the total length L1 of the first section 23, which is P1=R1/L1. Similarly, a light output ratio of the second section 24 is P2=R2/L2. If a total light guide amount input by the light source is 1, that is, a total light guide amount input at the first section 23 is 1, a light guide amount of the first section 23 is 1×P1, which indicates that a light guide amount already output at the first section 23 is P1, and the remaining light guide amount 1-P1 is transmitted to the second section 24. Therefore, the light guide amount entering the second section 24 is 1-P1, and an output light guide amount of the second section 24 is (1-P1)×P2. In order to make the output light guide amount of the second section 24 be the same as the output light guide amount of the first section 23 to improve light guide uniformity, P1=(1-P1)×P2, and the light output ratio P2 of the second section 24 can be calculated according to the light output ratio P1 of the first section 23, where P2=P1/(1-P1).

If it is further taken into account that loss of the light guide amount is incurred in an actual light guide strip and that after a reflection ratio is increased light guide performance decreases and the light guide amount is not reflected and transmitted to a next section completely, a parameter K is added for correction. Therefore, the light output ratio P2 of the output portions of the second section 24 can be corrected to be P2=K×P1/(1-P1). According to an experimental result, a preferred range of K is 1.3-2.3. Furthermore, the range of the parameter K can be adjusted according to the shape of the light guide strip. When the light guide strip is in the shape of a circular arc or is curved, a preferred range of the parameter K is 1.8-2.3; when the light guide strip is straight, a preferred range of the parameter K is 1.3-1.8.

In the embodiment, the output portions and the light guide portions are disposed in an alternate manner. When the sections are away from the incident portion, the total length of the output portions of the sections increases, and the total length of the light guide portions decreases. For example, the first section 23 is close to the incident portion 214, and the second section 24 is away from the incident portion 214, so that, compared with the first section 23, in the second section 24 the output portions 241, 243, and 249 are increasingly denser, the total length R2 thereof increases, but the light guide portions 242 and 244 are increasingly looser, and the total length thereof decreases.

Therefore, the total length of the output portions of the second section is controlled so that the output light guide amount of the second section is the same as that of the first section, so as to improve output light amount uniformity of the light guide device of the present invention.

Referring to FIG. 2, each light guide strip further includes a reflecting surface, which is disposed at a second end of the light guide strip. The second end is opposite to the first end. In the embodiment, the light guide strip 21 further includes a reflecting surface 213, which is disposed at a second end 212 of the light guide strip 21. The second end 212 is opposite to the first end 211. The light guide strip 22 further includes a reflecting surface 223, which is disposed at a second end 222 of the light guide strip 22. The second end 222 is opposite to the first end 221. The reflecting surface 213 of the light guide strip 21 and the reflecting surface 223 of the light guide strip 22 can reflect the light back to the light guide strip 21 and the light guide strip 22 respectively, so as not to incur a light mixing phenomenon at a junction of the light guide strip 21 and the light guide strip 22, thereby avoiding a light guide unevenness situation at the junction of the light guide strip 21 and the light guide strip 22.

Furthermore, the light guide strips 21 and 22 have the reflecting surfaces 213 and 223, so that the color of the light of the light source 25 can be different from the color of the light of the light source 26, so as to enhance color variation of the emitted light.

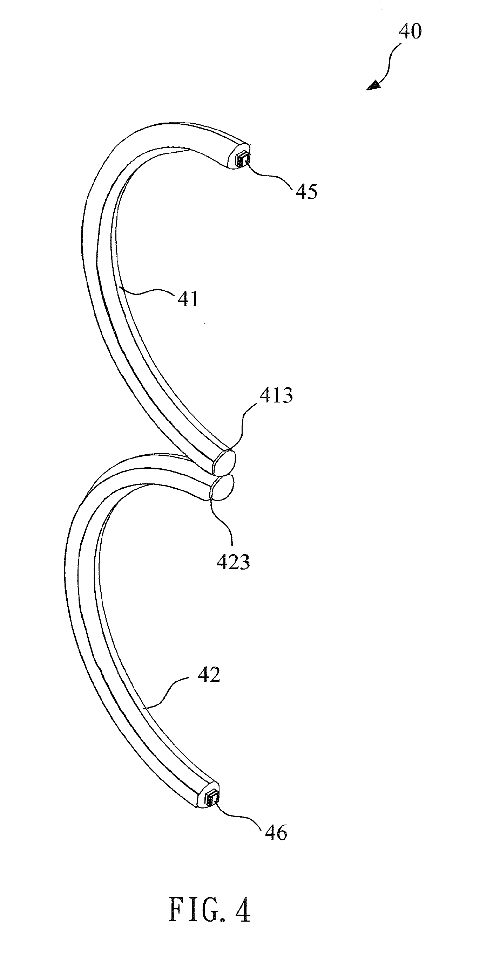

Referring to FIG. 4, it is a schematic perspective view of a light guide device according to a second embodiment of the present invention. According to the second embodiment of the present invention, the light guide device 40 includes two light guide strips 41 and 42. The structure of the two light guide strips 41 and 42 is the same as the structure of the two light guide strips 21 and 22 of the first embodiment, which is not repeated herein. A difference between the light guide device 40 of the second embodiment of the present invention and the light guide device 20 of the first embodiment lies in that the two light guide strips 41 and 42 are connected to form an W-shaped light guide device. Meanwhile, the light guide strips 41 and 42 have reflecting surfaces 413 and 423, so that the color of the light of a light source 45 can be different from the color of the light of a light source 46, so as to enhance color variation of the emitted light.

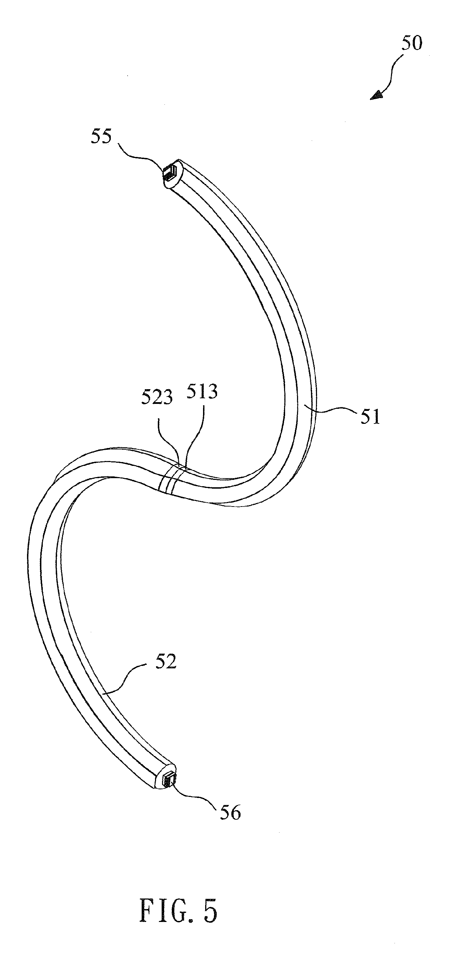

Referring to FIG. 5, it is a schematic perspective view of a light guide device according to a third embodiment of the present invention. According to the third embodiment of the present invention, the light guide device 50 includes two light guide strips 51 and 52. The structure of the two light guide strips 51 and 52 is the same as the structure of the two light guide strips 21 and 22 of the first embodiment, which is not repeated herein. A difference between the light guide device 50 of the third embodiment of the present invention and the light guide device 20 of the first embodiment lies in that the two light guide strips 51 and 52 are connected to form an S-shaped light guide device. Similarly, the light guide strips 51 and 52 have reflecting surfaces 513 and 523, so that the color of the light of a light source 55 can be different from the color of the light of a light source 56, so as to enhance color variation of the emitted light.

Therefore, the plurality of light guide strips of the light guide device of the present invention can receive light sources of different colors respectively, and the plurality of light guide strips can be connected to form a predetermined shape (for example, the aforementioned circular shape, the W shape, or the S shape), so as to provide more shapes and color variation of emitted light.

While several embodiments of the present invention have been illustrated and described, various modifications and improvements can be made by those skilled in the art. The embodiments of the present invention are therefore described in an illustrative but not in a restrictive sense. It is intended that the present invention should not be limited to the particular forms as illustrated and that all modifications which maintain the spirit and scope of the present invention are within the scope defined in the appended claims.

## Claims

1. A light guide device (20) comprising at least one light guide strip (21, 22), each light guide strip comprising:
an incident portion (214), disposed at a first end of the light guide strip, and used for receiving at least one light source; and
at least two sections (23, 24), comprising at least one first section and at least one second section, wherein the first section and the second section respectively have a plurality of output portions and a plurality of light guide portions, a total length of the first section is L1, a total length of the output portions of the first section is R1, and R1/L1 is a light output ratio P1; a total length of the second section is L2, a total length of the output portions of the second section is R2, and R2/L2 is a light output ratio P2; P2=K×P1/(1-P1), where K is a parameter, and a range of K is 1.3-2.3.

2. The light guide device according to Claim 1, wherein the light guide strip is in the shape of a circular arc or is curved, and the range of the parameter K is 1.8-2.3.

3. The light guide device according to Claim 1, wherein the light guide strip is straight, and the range of the parameter K is 1.3-1.8.

4. The light guide device according to one of the preceding Claims, wherein the output portions and the light guide portions are disposed in an alternate manner, when the sections are away from the incident portion, the total length of the output portions of the sections increases, and the total length of the light guide portions decreases.

5. The light guide device according to one of the preceding Claims, wherein each light guide portion is flat, and each output portion is zigzag.

6. The light guide device according to one of the preceding Claims, wherein each light guide strip further comprises a reflecting surface disposed at a second end of the light guide strip, the second end is opposite to the first end.

7. The light guide device according to one of the preceding Claims, wherein the light guide device comprising a plurality of light guide strips, and the light guide strips can be connected to form a predetermined shape.

8. The light guide device according to one of the preceding Claims, wherein the light guide device comprising a plurality of light guide strips, the incident portions of the light guide strips receive light sources of different colors.
